# EUROPÄISCHE PATENTSCHRIFT

(11) **EP 2 745 459 B1**
(45) Veröffentlichungstag und Bekanntmachung des Hinweises auf die Patenterteilung: **13.01.2021**
(21) Anmeldenummer: 12813747.8
(22) Anmeldetag: 16.08.2012
(51) Int. Cl.: H04L 7/10, G06F 13/40

(54) **SCHALTUNGSANORDNUNG UND VERFAHREN ZUM UEBERTRAGEN VON SIGNALEN**
CIRCUIT ARRANGEMENT AND METHOD FOR TRANSMITTING SIGNALS
CIRCUITERIE ET PROCÉDÉ DE TRANSMISSION DE SIGNAUX

(30) Priorität: 16.08.2011 DE 102011052760
(43) Veröffentlichungstag der Anmeldung: 25.06.2014
(73) Patentinhaber: Silicon Line GmbH, 80687 München (DE)
(72) Erfinder: BLON, Thomas, 80687 München (DE); SUTTORP, Thomas, 80687 München (DE); HOELTKE, Holger, 80995 München (DE)
(74) Vertreter: Hofmann, Andreas
(86) Internationale Anmeldenummer: PCT/DE2012/200051
(87) Internationale Veröffentlichungsnummer: WO 2013/023653

(56) Entgegenhaltungen:
- "SL83014 by Silicon Line GmbH", , 3. März 2011 (2011-03-03), XP055057661, Gefunden im Internet: URL:http://www.silicon-line.com/SL83014.ht m [gefunden am 2013-03-25]
- "Snapshots of SL83014 by Silicon Line GmbH - *Evidence of publication prior to priority date*", , 3. März 2011 (2011-03-03), XP055057663, Gefunden im Internet: URL:http://www.silicon-line.com/SL83014.ht m [gefunden am 2013-03-25]
- "MIPI Alliance Specification for D-PHY", , 22. September 2009 (2009-09-22), Seiten 1-123, XP055057664, Gefunden im Internet: URL:http://www.mipi.org/specifications/phy sical-layer [gefunden am 2013-03-25]
- Gerrit Den Besten ET AL: "D-PHY Tutorial", , 31. Dezember 2005 (2005-12-31), XP055058187, Gefunden im Internet: URL:http://www.mipi.org [gefunden am 2013-03-28]
- DARTNELL P ET AL: "Serdes Framer Interface Level 5 (SFI-5): Implementation Agreement for 40Gb/s Interface for Physical Layer Devices (OIF-SF15-01.01)", OPTICAL INTERNETWORKING FORUM (OIF), , 29. Januar 2002 (2002-01-29), Seite 62pp, XP009119852, Gefunden im Internet: URL:http://www.oiforum.com/public/document s/OIF-SFI5-01.0.pdf [gefunden am 2009-07-22]

## Beschreibung

### Technisches Gebiet

Die vorliegende Erfindung betrifft eine Schaltungsanordnung gemäß dem Oberbegriff des Anspruchs 1 sowie ein Verfahren gemäß dem Oberbegriff des Anspruchs 11.

### Stand der Technik, insbesondere dessen Nachteile und technische Probleme

Die Bitübertragungsschicht oder physikalische Schicht (PHY) ist die unterste Schicht im O[pen]S[ystems]I[nterconnection]-Schichtenmodell, das auch OSI-Referenzmodell genannt wird und ein Schichtenmodell der Internationalen Organisation für Normung (ISO) bezeichnet, das wiederum als Designgrundlage von Kommunikationsprotokollen in Rechnernetzen dient.

Die Physical Layer (PHY) ist für Combining, F[orward]E[rror]C[orrection], Modulation, Power Control, Spreading (C[ode]D[ivision]M[ultiple]A[ccess]) und dergleichen zuständig und kennt weder Daten noch Anwendungen, sondern nur Nullen und Einsen. PHY stellt der darüber liegenden Sicherungsschicht (D[ata]L[ink]L[ayer]), insbesondere einer Teilschicht namens M[edia]A[ccess]C[ontrol]-Layer, logische Kanäle zur Verfügung (Transportkanäle bei U[niversal]M[obile]T[elecommunications]S[ystem]).

D-PHY ermöglicht grundsätzlich eine flexible, kostengünstige und schnelle serielle Schnittstelle für Kommunikationsverbindungen zwischen Komponenten innerhalb einer mobilen Vorrichtung.

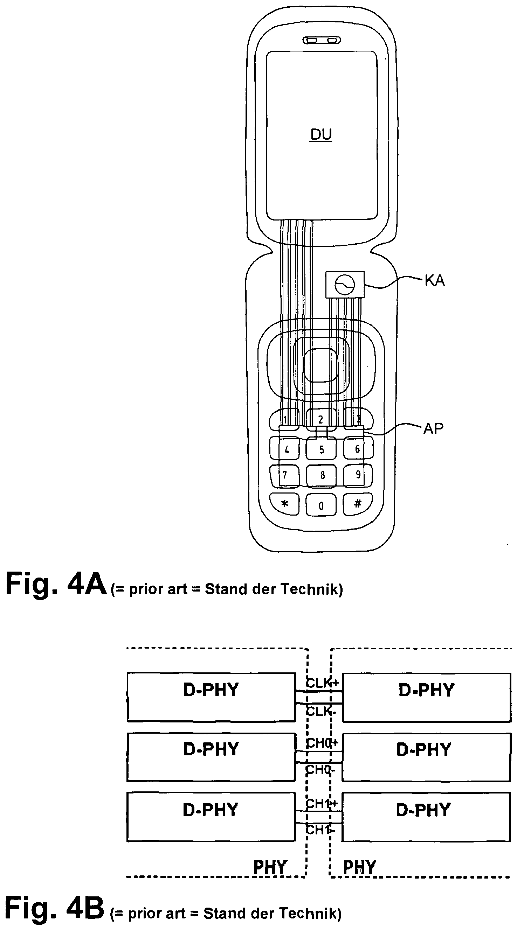

Wie anhand Fig. 4A veranschaulicht, stellt in modernen Mobiltelefonen eine Datenquelle, zum Beispiel ein Applikationsprozessor, am M[obile]I[ndustry]P[rocessor]I[nterface]-D[isplay]S[erial]I[nterface] Bilddaten als D-PHY-Signale für die Darstellung an einer angeschlossenen Datensenke, zum Beispiel an einem angeschlossenen Display, zur Verfügung. Auch kann eine Datensenke, zum Beispiel ein Applikationsprozessor, über ein MIPI-C[amera]S[erial]I[nterface] Bilddaten von einer angeschlossenen Datenquelle, zum Beispiel von einer angeschlossenen Kamera, im D-PHY-Format empfangen.

Ein auf dem D-PHY-Protokoll basierendes DSI oder DSI-2 oder CSI oder CSI-2 oder CSI-3 umfasst bis zu vier differentielle Datenleitungen und eine differentielle Taktleitung, die den Applikationsprozessor elektrisch mittels Kupferkabel mit dem Display und/oder mit der Kamera verbinden. Die Datenrate pro differentieller Datenleitung beträgt bis zu 1,5 Gbps (Gigabit pro Sekunde).

Dieses konventionelle Versenden und Empfangen der D-PHY-DSI- oder D-PHY-CSI-Signale über ein bis vier differentielle Datensignale und eine differentielle Taktleitung ist in der D-PHY-Schnittstellenkonfiguration der Fig. 4B anhand zweier Datenkanäle (= sogenannte data lanes CH0+, CH0- und CH1+, CH1-) und einer Taktleitung (= sogenannte clock lane CLK+, CLK-) zwischen den Modulen der Master-Seite (= Datenquelle, zum Beispiel Kamera und/oder Applikationsprozessor) und den Modulen der Slave-Seite (= Datensenke, zum Beispiel Applikationsprozessor und/oder Anzeigeeinheit) exemplarisch veranschaulicht.

Wie in diesem Zusammenhang aus Fig. 4A ersichtlich ist, werden pro angeschlossenem Display oder pro angeschlossener Kamera bis zu zehn Kupferleitungen zur Datenübertragung benötigt (zum Beispiel viermal zwei Datenleitungen und einmal zwei Taktleitungen).

Im Hinblick auf eine wünschenswerte Reduzierung der Leitungen ist hier eine serialisierte Signal-Übertragung in Erwägung zu ziehen. Eine derartige Serialisierung ist jedoch konventionellerweise durchaus fehleranfällig und nicht selten instabil.

In der vom 3. März 2011 datierenden Informationsschrift "World's first MIPI® D-PHY optical bridge IC for mobile phones" der Firma "Silicon Line GmbH", München, ist ein integrierter Baustein mit der Typenbezeichnung SL83014 angekündigt, ein Brückenschaltkreis, der auf Mobiltelefone abzielt, die den aktuellen D-PHY-Standard der MIPI®-Vereinigung nutzen. Der Schaltkreis soll dazu genutzt werden, Anzeigeschirme, Kameras und Anwendungsprozessoren optisch zu verbinden. Der Schaltkreis akzeptiert bis zu vier Datenpfade, sogenannte data lanes, sowie einen Taktpfad (clock lane) und serialisiert die Daten zur Übertragung über eine optische Hochgeschwindigkeitsverbindung. Sowohl sogenannte HS-(Hochgeschwindigkeit, von 80 Mbps bis 1 Gbps) als auch LP- (niedrige Leistung, bis zu 10 Mbps) Vorwärts-Datenübertragungs-Betriebsarten werden unterstützt. Der SL83014 schließt als optionales Merkmal eine galvanische Verbindung ein, die für eine bidirektionale LP-Datenübertragung genutzt werden kann.

### Darstellung der vorliegenden Erfindung: Aufgabe, Lösung, Vorteile

Die Erfindung ist in den angehängten Ansprüchen definiert. Soweit die folgenden Ausführungsbeispiele nicht unter den Schutzumfang der Ansprüche fallen, dienen sie lediglich der Veranschaulichung.

Ausgehend von den vorstehend dargelegten Nachteilen und Unzulänglichkeiten sowie unter Würdigung des umrissenen Standes der Technik liegt der vorliegenden Erfindung die Aufgabe zugrunde, eine Schaltungsanordnung der eingangs genannten Art sowie ein Verfahren der eingangs genannten Art so weiterzuentwickeln, dass eine serialisierte Signal-Übertragung stets fehlerfrei und stabil erfolgt.

Diese Aufgabe wird durch eine Schaltungsanordnung mit den Merkmalen des Anspruchs 1 sowie durch ein Verfahren mit den Merkmalen des Anspruchs 11 gelöst. Vorteilhafte Ausgestaltungen und zweckmäßige Weiterbildungen der vorliegenden Erfindung sind in den jeweiligen Unteransprüchen gekennzeichnet.

Es werden also eine Schaltungsanordnung sowie ein Verfahren vorgeschlagen, mittels derer
- die single-ended, auf Logikpegeln basierenden Signalen entsprechenden H[igh]S[peed]-Daten und
- die differentiellen, insbesondere auf common mode basierenden, Signalen entsprechenden L[ow]P[ower]-Daten zu einem gemeinsamen Signalstrom serialisiert werden.

Bei einer derartigen Übertragungsstrecke mit gemeinsamem serialisiertem Signalstrom werden die H[igh]S[peed]-/L[ow]P[ower]-Daten durch mindestens einen im Wesentlichen mindestens einen Multiplexer aufweisenden Senderbaustein (= Sendeanordnung) gebündelt und als gemeinsamer serieller Signalstrom an einen Empfängerbaustein (= Empfangsanordnung) übertragen.

Diese im Wesentlichen mindestens einen Demultiplexer aufweisende Empfangsanordnung entbündelt die seriellen Daten und gibt sie in ursprünglicher Form wieder als H[igh]S[peed]-/L[ow]P[ower]-Daten aus. Der an der Sendeanordnung anliegende CL[oc]K dient als Taktreferenz für den Multiplexer und wird im gemeinsamen seriellen Signalstrom eingebettet. Die Empfangsanordnung regeneriert diesen Takt und gibt ihn als CL[oc]K wieder aus.

Ausgehend von einer Situation, in der alle Dateneingänge H[igh]S[peed]-Daten tragen, besteht die übliche Vorgehensweise zur Datenbündelung darin, die Daten zu multiplexen und als seriellen Datenstrom zu versenden.

Im M[obile]I[ndustry]P[rocessor]I[nterface]-D-PHY-Standard ist allerdings vereinbart, dass die Rückkehr zum sogenannten L[ow]P[ower]-Übertragungsmodus mittels Spannungsamplituden signalisiert wird, die außerhalb der Spannungspegel liegen, die zur Signalisierung der H[igh]S[peed]-Daten verwendet werden.

Diese L[ow]P[ower]-Signalpegel stellen eine zusätzliche Information dar, die im Datenraum des, wie vorstehend dargelegt, einfach gebündelten seriellen Datenstroms nicht kodiert werden können.

Erfindungsgemäß wird hierzu vorgeschlagen, mindestens eine weitere, insbesondere virtuelle, Lane einzuführen, die ausschließlich L[ow]P[ower]-Daten enthält und die parallel zu den H[igh]S[peed]-Lanes in den Multiplexer gegeben wird. Hierdurch wird die Übermittlung von L[ow]P[ower]-Zuständen ermöglicht, ohne den Kodierungsraum für H[igh]S[peed]-Daten auf den dafür vorgesehenen Eingängen des Multiplexers erweitern zu müssen.

Auf der, insbesondere virtuellen, Lane, die auch als Telegramm-Lane bezeichnet werden kann, können auch andere systemrelevante Informationen transportiert werden; so kann zum Beispiel die Information übertragen werden, dass die serielle Datenverbindung in Kürze gekappt werden wird.

Exemplarisch lässt sich die vorliegende Erfindung beim seriellen und/oder gebündelten, insbesondere CSI-protokollbasierten und/oder CSI-2-protokollbasierten und/oder CSI-3-protokollbasierten und/oder DSI-protokollbasierten und/oder DSI-2-protokollbasierten, Übertragen sowohl von single-ended, auf Logikpegeln basierenden Daten- und Taktsignalen als auch von differentiellen, insbesondere auf common mode basierenden, Daten- und Taktsignalen, insbesondere von D-PHY-Datensignalen und D-PHY-Taktsignalen, zum Beispiel von bis zu vier Bit breiten MIPI-D-PHY-Datensignalen und MIPI-D-PHY-Taktsignalen, zwischen mindestens einer Datenquelle, insbesondere mindestens einer, zum Beispiel hochauflösenden und/oder zum Beispiel als Bildquelle fungierenden, Kamera und/oder mindestens einem Applikationsprozessor, und mindestens einer Datensenke, insbesondere mindestens einem Applikationsprozessor und/oder mindestens einer, zum Beispiel hochauflösenden und/oder zum Beispiel als Bildsenke fungierenden, Anzeigeeinheit, zum Beispiel mindestens einem Display oder mindestens einem Monitor.

### Kurze Beschreibung der Zeichnungen

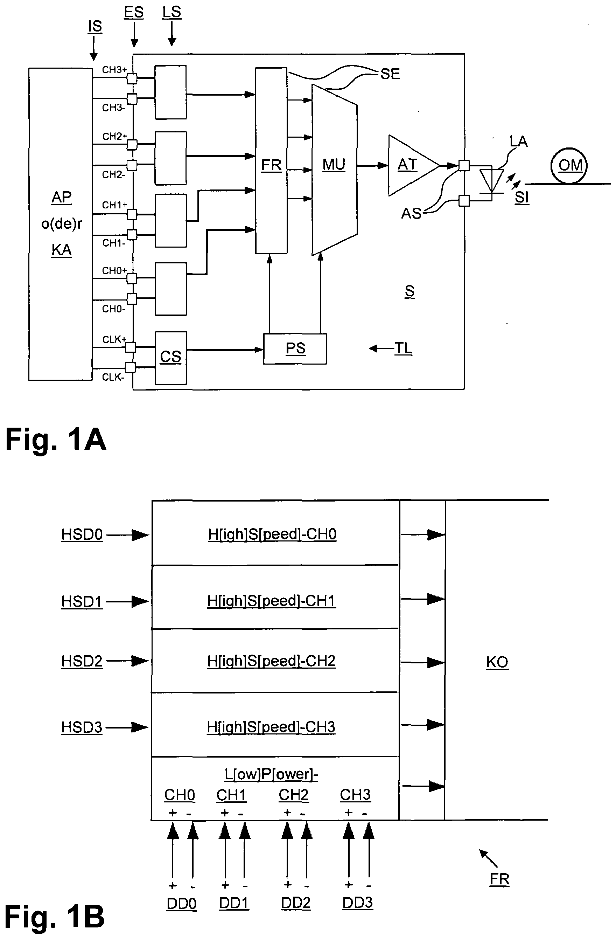

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 11 nachgeordneten Ansprüche verwiesen, andererseits werden weitere Ausgestaltungen, Merkmale und Vorteile der vorliegenden Erfindung nachstehend unter Anderem anhand der durch Fig. 1A bis Fig. 3 veranschaulichten Ausführungsbeispiele näher erläutert.

Es zeigt:
- Fig. 1A: in konzeptuell-schematischer Darstellung ein Ausführungsbeispiel des ersten Teils, nämlich der gemäß der vorliegenden Erfindung ausgebildeten Sendeanordnung einer Schaltungsanordnung, die nach dem Verfahren gemäß der vorliegenden Erfindung arbeitet;
- Fig. 1B: in konzeptuell-schematischer Detaildarstellung ein Ausführungsbeispiel des Framers der Sendeanordnung aus Fig. 1A;
- Fig. 1C: in konzeptuell-schematischer Detaildarstellung ein Ausführungsbeispiel des Multiplexers der Sendeanordnung aus Fig. 1A;
- Fig. 2A: in konzeptuell-schematischer Darstellung ein Ausführungsbeispiel des zweiten Teils, nämlich der gemäß der vorliegenden Erfindung ausgebildeten Empfangsanordnung einer Schaltungsanordnung, die nach dem Verfahren gemäß der vorliegenden Erfindung arbeitet;
- Fig. 2B: in konzeptuell-schematischer Detaildarstellung ein Ausführungsbeispiel des Deframers der Empfangsanordnung aus Fig. 2A;
- Fig. 3: in diagrammatischer Darstellung ein Ausführungsbeispiel der jeweiligen Spannungspegel bei H[igh]S[peed]-Datenübertragung und bei L[ow]P[ower]-Datenübertragung;
- Fig. 4A: in konzeptuell-schematischer Darstellung ein Beispiel einer Anordnung aus dem Stand der Technik; und
- Fig. 4B: in konzeptuell-schematischer Darstellung ein Beispiel einer der Anordnung aus Fig. 4A zugrunde liegenden Schnittstellenkonfiguration mit zwei Datenkanälen und mit einer Taktleitung.

Gleiche oder ähnliche Ausgestaltungen, Elemente oder Merkmale sind in Fig. 1A bis Fig. 4B mit identischen Bezugszeichen versehen.

### Bester Weg zur Ausführung der vorliegenden Erfindung

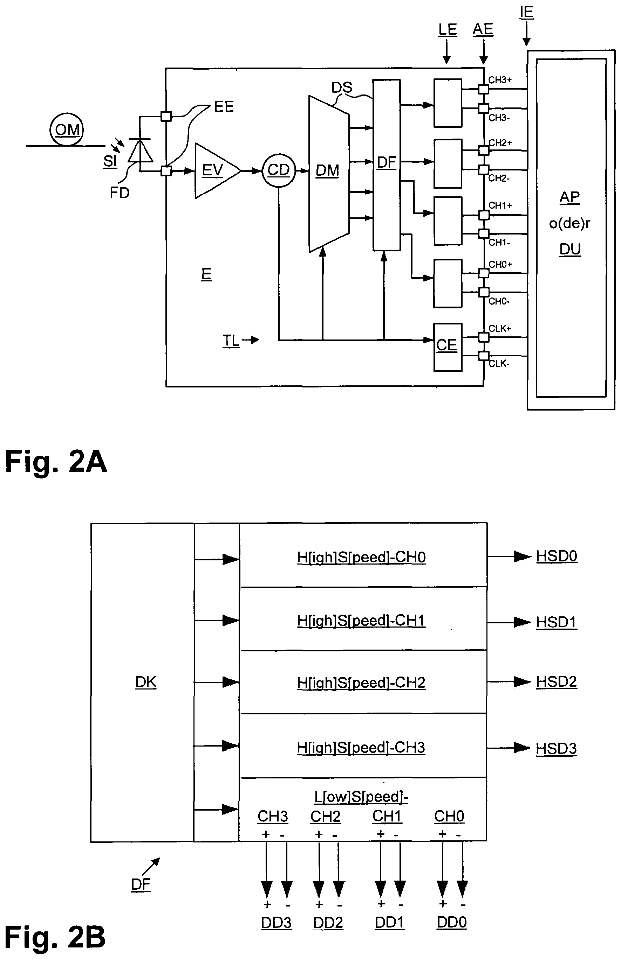

- Mittels des anhand Fig. 1A veranschaulichten Ausführungsbeispiels einer Sendeanordnung S gemäß der vorliegenden Erfindung und
- mittels des anhand Fig. 2A veranschaulichten Ausführungsbeispiels einer Empfangsanordnung E gemäß der vorliegenden Erfindung,
   durch die zusammen ein Ausführungsbeispiel einer Schaltungsanordnung S, E (vgl. Fig. 1A, Fig. 2A) gemäß der vorliegenden Erfindung gebildet wird (im Rahmen der vorliegenden Erfindung ist es möglich, die Sendeanordnung S und die Empfangsanordnung E unabhängig voneinander zu realisieren und zu betreiben), ist es grundsätzlich möglich, eine kabelbasierte Verbindung
- gemultiplext und mithin serialisiert auf optischer Basis, insbesondere auf Basis mindestens eines optischen Mediums, zum Beispiel auf Basis mindestens eines optischen Wellenleiters OM (vgl. hierzu im Detail Fig. 1A, Fig. 2A), wie etwa auf Basis mindestens einer Glasfaser und/oder auf Basis mindestens einer Plastikfaser, und/oder
- nicht gemultiplext auf elektrischer oder galvanischer Basis, insbesondere auf Basis mindestens einer elektrischen oder galvanischen Verbindung, zum Beispiel auf Basis mindestens eines Kupferkabels und/oder auf Basis mindestens einer, etwa auf mindestens einer Leiterplatte angeordneten, elektrischen Leitung,
   zu realisieren und zu betreiben.

Fig. 1A zeigt ein Ausführungsbeispiel für den prinzipiellen Aufbau einer Sendeanordnung S zum Anschluss an eine D[isplay]S[erial]I[nterface]-Datenübertragungsschnittstelle IS oder auch an eine C[amera]S[erial]I[nterface]-Datenübertragungsschnittstelle IS.

Die im Applikationsprozessor AP oder in der Kamera KA generierten Bilddaten werden auf vier Datenleitungen oder Kanälen CH0+, CH0-, CH1+, CH1-, CH2+, CH2-, CH3+, CH3- als D-PHY-Signale an der bis zu vier Bit breiten Datenübertragungsschnittstelle IS zusammen mit D-PHY-korrekten Taktsignalen CLK+, CLK- zur Verfügung gestellt.

Die Sendeanordnung S nimmt diese Signale an einer integrierten Interface-Logik LS auf, deren Blöcke jeweils mindestens einen Zustandsautomaten zur richtigen Interpretation der D-PHY-Logiksignale und zur Unterscheidung zwischen hochfrequenten Datenströmen (sogenannten H[igh]S[peed]-Daten) und niederfrequenten Datenströmen (sogenannten L[ow]S[peed]-Daten) aufweisen können.

Ein in der Sendeanordnung S folgender Framer FR (vgl. hierzu detaillierter Fig. 1B) stellt die D[irect]C[urrent]-Balancierung des Eingangssignals sicher und erzeugt einen auf der Empfangsseite (vgl. Fig. 2A) wiedererkennbaren Rahmen, der es der Empfangsanordnung E (vgl. Fig. 2A) ermöglicht, die empfangenen Daten den richtigen Ausgangsdatenleitungen oder Ausgangskanälen CH0+, CH0-, CH1+, CH1-, CH2+, CH2-, CH3+, CH3- wieder zuzuordnen.

Im Detail kann der Framer FR gemäß Fig. 1B sowohl mit den single-ended, auf Logikpegeln basierenden Datensignalen HSD0, HSD1, HSD2, HSD3 als auch mit den differentiellen Datensignalen DD0+, DD0-, DD1+, DD1-, DD2+, DD2-, DD3+, DD3- beaufschlagt werden. Mittels seines als 5b/6b-Kodierblock ausgebildeten Kodierers KO bettet der Framer FR gemäß Fig. 1B diese differentiellen Datensignale DD0+, DD0-, DD1+, DD1-, DD2+, DD2-, DD3+, DD3- in den Strom der single-ended, auf Logikpegeln basierenden Datensignale HSD0, HSD1, HSD2, HSD3 ein.

Ein sich dem Framer FR anschließender Multiplexer MU, insbesondere H[igh]S[peed]-Mux, erzeugt mit Hilfe eines als Phase-Locked-Loop, insbesondere als C[lock]M[ultiplier]U[nit], ausgebildeten Taktgenerators PS das hochfrequente serielle oder gebündelte Sendesignal, das dem Ausgang AS der Sendeanordnung S mittels eines Ausgangstreiber AT zur Verfügung gestellt wird. Der Framer FR und der Multiplexer MU bilden zusammen den Serialisierer SE.

Hierbei dient das über den Taktport CLK+, CLK- und über das Taktmodul CS der Interface-Logik LS mittels des Taktgenerators PS bereit gestellte D-PHY-Taktsignal als (Takt-)Referenz für den Serialisierer SE, insbesondere für dessen Multiplexer MU, und wird im seriellen Datenstrom, also im serialisierten Ausgangssignal eingebettet. Hierdurch entsteht der gemeinsame Signalstrom SI, der an die Empfangsanordnung E (vgl. Fig. 2A) übermittelt wird.

Wie der Darstellung gemäß Fig. 1A des Weiteren entnehmbar ist, ist der Ausgangstreiber AT als integrierter Lasertreiber zur Ansteuerung mindestens eines direkt angeschlossenen Lasers LA, insbesondere zur Ansteuerung mindestens einer direkt angeschlossener V[ertical]C[avity]S[urface]E[mitting]L[aserdiode], ausgeführt.

Fig. 2A zeigt ein Ausführungsbeispiel für den prinzipiellen Aufbau einer Empfangsanordnung E zum Anschluss an eine D[isplay]S[erial]I[nterface]-Datenübertragungsschnittstelle IE oder auch an eine C[amera]S[erial]I[nterface]-Datenübertragungsschnittstelle IE.

Die von der Sendeanordnung S (vgl. Fig. 1A) ausgesandten seriellen oder gebündelten Daten werden über einen Eingangsverstärker EV der Empfangsanordnung E aufgenommen und einer integrierten Takt- und Datenrückgewinnung CD zugeführt.

Diese integrierte Takt- und Datenrückgewinnung CD regeneriert aus dem gemeinsamen Signalstrom SI den ursprünglichen D-PHY-Takt, der über das Taktmodul CE der Interface-Logik LE direkt dem D[isplay]S[erial]I[nterface] oder dem C[amera]S[erial]I[nterface] wieder zur Verfügung gestellt wird. Der verbleibende serielle Datenstrom wird über einen Demultiplexer DM entbündelt sowie parallelisiert und an einen Deframer DF (vgl. hierzu detaillierter Fig. 2B) übergeben, der grundsätzlich spiegelbildlich zum Framer FR gemäß Fig. 1B aufgebaut ist. Der Demultiplexer DM und der Deframer DF bilden zusammen den Deserialisierer DS.

Im Detail kann der Deframer FR gemäß Fig. 2B mittels seines als 6b/5b-Dekodierblock ausgebildeten Dekodierers DK die differentiellen Datensignale DD0+, DD0-, DD1+, DD1-, DD2+, DD2-, DD3+, DD3- von den single-ended, auf Logikpegeln basierenden Datensignalen HSD0, HSD1, HSD2, HSD3 separieren und die reparallelisierten Datensignale den jeweils zutreffenden Datenleitungen CH0+, CH0-, CH1+, CH1-, CH2+, CH2-, CH3+, CH3- wieder zuordnen.

Die in der Empfangsanordnung E dargestellten Interface-Logik-Blöcke LE können jeweils mindestens einen Zustandsautomaten zur richtigen Interpretation der D-PHY-Logiksignale und zur Unterscheidung zwischen hochfrequenten Datenströmen und niederfrequenten Datenströmen aufweisen.

Wie der Darstellung gemäß Fig. 2A des Weiteren entnehmbar ist, ist der Eingangsverstärker EV als integrierter Transimpedanzverstärker ausgeführt, der es ermöglicht, eine Fotodiode FD direkt an die Empfangsanordnung E anzuschließen.

Auf diese Weise ist es bei der Schaltungsanordnung S, E (vgl. Fig. 1A, Fig. 2A) gemäß der vorliegenden Erfindung möglich, die kabelbasierte gemultiplexte Verbindung zwischen der Sendeanordnung S (vgl. Fig. 1A) und der Empfangsanordnung E (vgl. Fig. 2A) auf optischer Basis, nämlich mittels eines, zum Beispiel in Form einer Glasfaser und/oder in Form einer Plastikfaser ausgebildeten, optischen Wellenleiters OM zu realisieren und zu betreiben.

Ausgehend von dieser Situation, in der alle Dateneingänge ES den single-ended, auf Logikpegeln basierenden Signalen entsprechende H[igh]S[peed]-Daten tragen, besteht die übliche Vorgehensweise zur Datenbündelung darin, die Daten mit dem Multiplexer MU gemäß Fig. 1A zu multiplexen und als seriellen Signalstrom SI zu versenden.

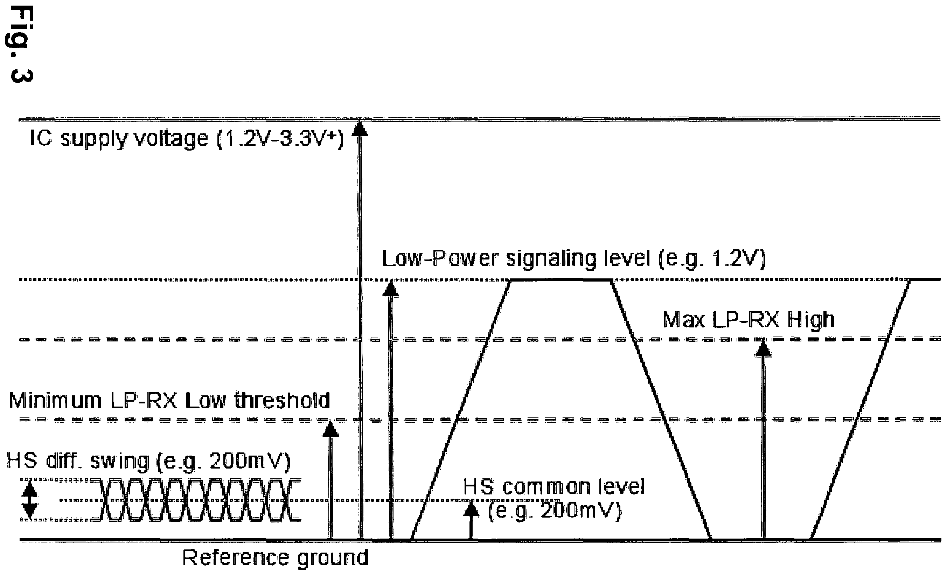

Im M[obile]I[ndustry]P[rocessor]I[nterface]-D-PHY-Standard ist allerdings vereinbart, dass die Rückkehr zum den differentiellen, insbesondere auf common mode basierenden, Signalen entsprechenden L[ow]P[ower]-Übertragungsmodus mittels Spannungsamplituden signalisiert wird, die außerhalb der Spannungspegel liegen, die zur Signalisierung der H[igh]S[peed]-Daten verwendet werden, wie anhand Fig. 3 veranschaulicht.

Diese L[ow]P[ower]-Signalpegel stellen eine zusätzliche Information dar, die im Datenraum des, wie vorstehend dargelegt, einfach gebündelten seriellen Signalstroms SI nicht kodiert werden können.

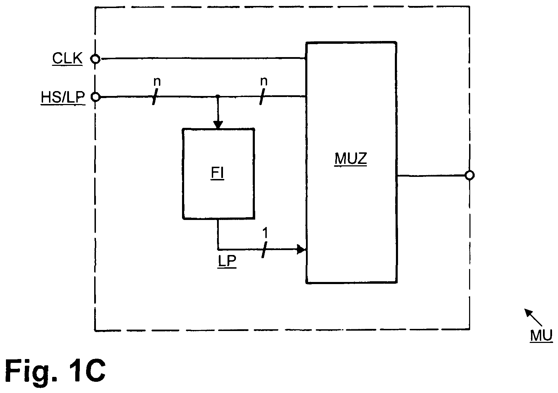

Aus diesem Grund wird gemäß Fig. 1C eine weitere, insbesondere virtuelle, Lane eingeführt, die nur L[ow]P[ower]-Daten enthält und die parallel zu den H[igh]S[peed]-Lanes in den Multiplexer MU gegeben wird.

Hierzu ist am H[igh]S[peed]-/L[ow]P[ower]-Dateneingang des Multiplexers MU mindestens ein Filter FI angeordnet, der L[ow]P[ower]-Daten aufgrund ihrer spezifischen Spannungspegel von H[igh]S[peed]-Daten unterscheiden kann. Dieser Filter FI führt die auf diese Weise gewonnenen L[ow]P[ower]-Daten als weiteren Eingang, sozusagen als virtuelle H[igh]S[peed]-Daten-Lane einem weiteren oder zusätzlichen Multiplexer MUZ zu.

Diese Lane kann als Telegramm-Lane bezeichnet werden. Ein exemplarischer Aufbau der virtuellen Telegramm-Lane kann wie folgt aussehen:

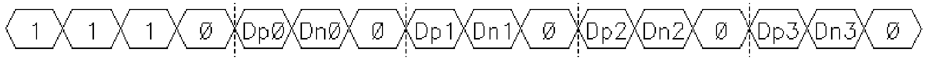

Die sechzehn Bits der virtuellen Telegramm-Lane werden aufgeteilt in
- zunächst eine vier Bit lange Sync-/Start-Sequenz, die der Synchronisation auf der Empfangsseite E dient, und
- nachfolgend je drei Bits pro L[ow]P[ower]-Datum.
   Mithin werden im gezeigten Ausführungsbeispiel vier Lane-Eingänge CH0+, CH0-, CH1+, CH1-, CH2+, CH2-, CH3+, CH3- behandelt.

Durch die Serialisierung der L[ow]P[ower]-Daten noch vor dem weiteren oder zusätzlichen Multiplexer MUZ werden diese L[ow]P[ower]-Daten nicht mit der gleichen Datenrate wie die parallel behandelten H[igh]S[peed]-Daten übertragen. In dem vorliegend exemplarisch behandelten MIPI-D-PHY-System ist es allerdings ohnehin so, dass die L[ow]P[ower]-Daten eine sehr viel geringere Datenrate als H[igh]S[peed]-Daten aufweisen.

Der Demultiplexer DM gemäß Fig. 2A kann in zum Multiplexer MU gemäß Fig. 1C spiegelbildlicher Weise aufgebaut sein.

### Bezugszeichenliste

- E: Empfangsanordnung
- S: Sendeanordnung
- AE: Ausgang der Empfangsanordnung E
- AP: Applikationsprozessor
- AS: Ausgang der Sendeanordnung S
- AT: Ausgangstreiber, insbesondere Lasertreiber
- CD: Takt- und Datenrückgewinnungseinheit
- CE: Taktmodul der Empfangs-Schnittstellen-Logik LE
- CH0±: erste Datenleitung oder erster Kanal
- CH1±: zweite Datenleitung oder zweiter Kanal
- CH2±: dritte Datenleitung oder dritter Kanal
- CH3±: vierte Datenleitung oder vierter Kanal
- CLK±: Taktleitung oder Taktkanal
- CS: Taktmodul der Sende-Schnittstellen-Logik LS
- DD0±: differentielles, insbesondere auf common mode basierendes, Datensignal auf erster Datenleitung oder erstem Kanal CH0±
- DD1±: differentielles, insbesondere auf common mode basierendes, Datensignal auf zweiter Datenleitung oder zweitem Kanal CH1±
- DD2±: differentielles, insbesondere auf common mode basierendes, Datensignal auf dritter Datenleitung oder drittem Kanal CH2±
- DD3±: differentielles, insbesondere auf common mode basierendes, Datensignal auf vierter Datenleitung oder viertem Kanal CH3±
- DF: Deframer
- DK: Dekodierer, insbesondere 6b/5b-Dekodierblock, des Deframers DF
- DM: Demultiplexer
- DS: Deserialisierungselement oder Deserialisierer
- DU: Anzeigeeinheit
- EE: Eingang der Empfangsanordnung E
- ES: Eingang der Sendeanordnung S
- EV: Eingangsverstärker, insbesondere Transimpedanzverstärker
- FD: Fotodiode
- FI: Filter, insbesondere Datenfilter, zum Beispiel L[ow]P[ower]-Datenfilter
- FR: Framer
- HS: High Speed
- HSD0: single-ended, auf Logikpegeln basierendes Datensignal auf erster Datenleitung oder erstem Kanal CH0±
- HSD1: single-ended, auf Logikpegeln basierendes Datensignal auf zweiter Datenleitung oder zweitem Kanal CH1±
- HSD2: single-ended, auf Logikpegeln basierendes Datensignal auf dritter Datenleitung oder drittem Kanal CH2±
- HSD3: single-ended, auf Logikpegeln basierendes Datensignal auf vierter Datenleitung oder viertem Kanal CH3±
- IE: datensenkenbezogene CSI- und/oder CSI-2- und/oder CSI-3- und/oder DSI- und/oder DSI-2-Schnittstelle
- IS: datenquellenbezogene CSI- und/oder CSI-2- und/oder CSI-3- und/oder DSI- und/oder DSI-2-Schnittstelle
- KA: Kamera
- KO: Kodierer, insbesondere 5b/6b-Kodierblock, des Framers FR
- LA: Laser
- LE: Empfangs-Schnittstellen-Logik
- LP: Low Power
- LS: Sende-Schnittstellen-Logik
- MU: Multiplexer
- MUZ: weiterer oder zusätzlicher Multiplexer im Multiplexer MU
- OM: optisches Medium, insbesondere optischer Wellenleiter, zum Beispiel Glasfaser und/oder Plastikfaser
- PS: Taktgenerator, insbesondere Phase-Locked-Loop, zum Beispiel Clock Multiplier Unit
- SE: Serialisierungselement oder Serialisierer
- SI: gemeinsamer Signalstrom
- TL: Taktleitung

## Patentansprüche

1. Schaltungsanordnung (S, E) zum Übertragen
- sowohl von single-ended, auf Logikpegeln basierenden Daten- und Taktsignalen (HS)
- als auch von differentiellen, auf common mode basierenden Daten- und Taktsignalen (LP)
in Form mindestens eines mittels mindestens eines der Sendeanordnung (S) zugeordneten Serialisierers (SE) serialisierten gemeinsamen Signalstroms (SI) zwischen mindestens einer mindestens einer Datenquelle zuordbaren Sendeanordnung (S) und mindestens einer mindestens einer Datensenke zuordbaren Empfangsanordnung (E), wobei die Datenrate der differentiellen Daten- und Taktsignale (LP) verschieden von der Datenrate der single-ended, auf Logikpegeln basierenden Daten- und Taktsignale (HS) ist,
**gekennzeichnet durch**
mindestens einen dem Serialisierer (SE) zugeordneten Multiplexer (MU) zum Erzeugen des gemeinsamen Signalstroms (SI), welcher Multiplexer (MU) aufweist:
- mindestens ein Filter (FI) zum Unterscheiden der differentiellen Daten- und/oder Taktsignale (LP) von den single-ended, auf Logikpegeln basierenden Daten- und/oder Taktsignalen (HS) und
- mindestens einen weiteren Multiplexer (MUZ), der zusätzlich mit den vom Filter (FI) kommenden differentiellen Daten- und/oder Taktsignalen (LP) beaufschlagbar ist.

2. Schaltungsanordnung gemäß Anspruch 1, **dadurch gekennzeichnet, dass** die Datenrate der differentiellen Daten- und Taktsignale (LP) kleiner als die Datenrate der single-ended, auf Logikpegeln basierenden Daten- und Taktsignale (HS) ist.

3. Schaltungsanordnung gemäß Anspruch 1 oder 2, **dadurch gekennzeichnet, dass** die Sendeanordnung (S) aufweist:
- mindestens einen Eingang (ES) für die Datensignale und Taktsignale (HS; LP),
- mindestens eine dem Eingang (ES) nachgeschaltete Sende-Schnittstellen-Logik (LS) zum Aufnehmen der Datensignale und Taktsignale (HS, LP),
- den mindestens einen der Sende-Schnittstellen-Logik (LS) nachgeschalteten Serialisierer (SE) zum Erzeugen des gemeinsamen Signalstroms (SI),
- mindestens einen mindestens einem Taktmodul (CS) der Sende-Schnittstellen-Logik (LS) nachgeschalteten, dem Serialisierer (SE) vorgeschalteten und zum Erzeugen mindestens eines Referenztakts vorgesehenen Taktgenerator (PS),
- mindestens einen dem Serialisierer (SE) nachgeschalteten Ausgangstreiber (AT) und
- mindestens einen dem Ausgangstreiber (AT) nachgeschalteten Ausgang (AS) zum Übertragen des gemeinsamen Signalstroms (SI) an die Empfangsanordnung (E).

4. Schaltungsanordnung gemäß Anspruch 3, **dadurch gekennzeichnet, dass** der Taktgenerator (PS) als mindestens eine Phase-Locked-Loop, insbesondere als mindestens eine Clock Multiplier Unit, ausgebildet ist.

5. Schaltungsanordnung gemäß Anspruch 3 oder 4, **dadurch gekennzeichnet, dass** der Serialisierer (SE) aufweist:
- mindestens einen der Sende-Schnittstellen-Logik (LS) nachgeschalteten Framer (FR) zum Erzeugen mindestens eines in der Empfangsanordnung (E) wiedererkennbaren Rahmens für den gemeinsamen Signalstrom (SI) sowie
- den mindestens einen dem Framer (FR) nachgeschalteten Multiplexer (MU) zum Erzeugen des gemeinsamen Signalstroms (SI).

6. Schaltungsanordnung gemäß Anspruch 5, **dadurch gekennzeichnet, dass** der Framer (FR) sowohl mit den single-ended, auf Logikpegeln basierenden Datensignalen (HSD0, HSD1, HSD2, HSD3) als auch mit den differentiellen Datensignalen (DD0+, DD0-, DD1+, DD1-, DD2+, DD2-, DD3+, DD3-) beaufschlagbar ist und mittels mindestens eines Kodierers (KO), insbesondere mittels mindestens eines 5b/6b-Kodierblocks, die differentiellen Datensignale (DD0+, DD0-, DD1+, DD1-, DD2+, DD2-, DD3+, DD3-) in den Strom der single-ended, auf Logikpegeln basierenden Datensignale (HSD0, HSD1, HSD2, HSD3) einbettet.

7. Schaltungsanordnung gemäß mindestens einem der Ansprüche 1 bis 6, **dadurch gekennzeichnet, dass** die Empfangsanordnung (E) aufweist:
- mindestens einen Eingang (EE) für den von der Sendeanordnung (S) übertragenen gemeinsamen Signalstrom (SI),
- mindestens einen Eingangsverstärker (EV) zum Aufnehmen des gemeinsamen Signalstroms (SI),
- mindestens eine Takt- und Datenrückgewinnungseinheit (CD) zum Wiederherstellen der Datensignale und Taktsignale (HS, LP) aus dem gemeinsamen Signalstrom (SI),
- mindestens ein der Takt- und Datenrückgewinnungseinheit (CD) nachgeschaltetes Taktmodul (CE) mindestens einer Empfangs-Schnittstellen-Logik (LE),
- mindestens einen der Takt- und Datenrückgewinnungseinheit (CD) nachgeschalteten Deserialisierer (DS) zum Reparallelisieren der Daten- und/oder Taktsignale (HS, LP) und zum Zuordnen der reparallelisierten Daten- und/oder Taktsignale (HS, LP) auf die Empfangs-Schnittstellen-Logik (LE) und
- mindestens einen der Empfangs-Schnittstellen-Logik (LE) nachgeschalteten Ausgang (AE) für die Datensignale und Taktsignale (HS, LP).

8. Schaltungsanordnung gemäß Anspruch 7, **dadurch gekennzeichnet, dass** der Deserialisierer (DS) aufweist:
- mindestens einen der Takt- und Datenrückgewinnungseinheit (CD) nachgeschalteten Demultiplexer (DM) zum Reparallelisieren der Daten- und/oder Taktsignale (HS, LP) sowie
- mindestens einen dem Demultiplexer (DM) nachgeschalteten Deframer (DF) zum Zuordnen der reparallelisierten Daten- und/oder Taktsignale (HS, LP) auf die Empfangs-Schnittstellen-Logik (LE).

9. Schaltungsanordnung gemäß Anspruch 8, **dadurch gekennzeichnet, dass** der Deframer (DF) mittels mindestens eines Dekodierers (DK), insbesondere mittels mindestens eines 6b/5b-Dekodierblocks, die differentiellen Datensignale (DD0+, DD0-, DD1+, DD1-, DD2+, DD2-, DD3+, DD3-) von den single-ended, auf Logikpegeln basierenden Datensignalen (HSD0, HSD1, HSD2, HSD3) separiert und die reparallelisierten Datensignale den jeweiligen Datenleitungen (CH0+, CH0-, CH1+, CH1-, CH2+, CH2-, CH3+, CH3-) zuordnet.

10. Schaltungsanordnung gemäß mindestens einem der Ansprüche 1 bis 9, **dadurch gekennzeichnet, dass** der gemeinsame Signalstrom (SI) zwischen der Sendeanordnung (S) und der Empfangsanordnung (E)
- über mindestens ein optisches Medium (OM), insbesondere über mindestens einen optischen Wellenleiter, zum Beispiel über mindestens eine Glasfaser und/oder über mindestens eine Plastikfaser, und/oder
- über mindestens eine elektrische oder galvanische, insbesondere ein Bit breite, Verbindung (GA), insbesondere über mindestens ein Kupferkabel und/oder über mindestens eine, zum Beispiel auf mindestens einer Leiterplatte angeordnete, elektrische Leitung,
übertragbar ist.

11. Verfahren zum Übertragen
- sowohl von single-ended, auf Logikpegeln basierenden Daten- und Taktsignalen (HS)
- als auch von differentiellen, auf common mode basierenden Daten- und Taktsignalen (LP)
in Form mindestens eines mittels mindestens eines Serialisierers (SE) serialisierten gemeinsamen Signalstroms (SI) zwischen mindestens einer mindestens einer Datenquelle zuordbaren Sendeanordnung (S) und mindestens einer mindestens einer Datensenke zuordbaren Empfangsanordnung (E), wobei die Datenrate der differentiellen Daten- und Taktsignale (LP) verschieden von der Datenrate der single-ended, auf Logikpegeln basierenden Daten- und Taktsignale (HS) ist,
**gekennzeichnet durch**
mindestens einen dem Serialisierer (SE) zugeordneten Multiplexer (MU) zum Erzeugen des gemeinsamen Signalstroms (SI), welcher Multiplexer (MU) aufweist:
- mindestens ein Filter (FI) zum Unterscheiden der differentiellen Daten- und/oder Taktsignale (LP) von den single-ended, auf Logikpegeln basierenden Daten- und/oder Taktsignalen (HS) und
- mindestens einen weiteren Multiplexer (MUZ), der zusätzlich mit den vom Filter (FI) kommenden differentiellen Daten- und/oder Taktsignalen (LP) beaufschlagt wird.

12. Verfahren gemäß Anspruch 11, **dadurch gekennzeichnet, dass** die Datenrate der differentiellen Daten- und Taktsignale (LP) kleiner als die Datenrate der single-ended, auf Logikpegeln basierenden Daten- und Taktsignale (HS) ist.

13. Verfahren gemäß Anspruch 11 oder 12, **dadurch gekennzeichnet, dass** der gemeinsame Signalstrom (SI) zwischen der Sendeanordnung (S) und der Empfangsanordnung (E)
- über mindestens ein optisches Medium (OM), insbesondere über mindestens einen optischen Wellenleiter, zum Beispiel über mindestens eine Glasfaser und/oder über mindestens eine Plastikfaser, und/oder
- über mindestens eine elektrische oder galvanische, insbesondere ein Bit breite, Verbindung (GA), insbesondere über mindestens ein Kupferkabel und/oder über mindestens eine, zum Beispiel auf mindestens einer Leiterplatte angeordnete, elektrische Leitung,
übertragen wird.

14. Verfahren gemäß mindestens einem der Ansprüche 11 bis 13 und/oder Verwendung mindestens einer Schaltungsanordnung (S, E) gemäß mindestens einem der Ansprüche 1 bis 10 beim seriellen und/oder gebündelten, insbesondere CSI-protokollbasierten und/oder CSI-2-protokollbasierten und/oder CSI-3-protokollbasierten und/oder DSI-protokollbasierten und/oder DSI-2-protokollbasierten, Übertragen sowohl von single-ended, auf Logikpegeln basierenden Daten- und Taktsignalen (HS) als auch von differentiellen, insbesondere auf common mode basierenden, Daten- und Taktsignalen (LP), insbesondere von D-PHY-Datensignalen und D-PHY-Taktsignalen, zum Beispiel von bis zu vier Bit breiten MIPI-D-PHY-Datensignalen und MIPI-D-PHY-Taktsignalen, zwischen mindestens einer Datenquelle, insbesondere mindestens einer, zum Beispiel hochauflösenden und/oder zum Beispiel als Bildquelle fungierenden, Kamera (KA) und/oder mindestens einem Applikationsprozessor (AP), und mindestens einer Datensenke, insbesondere mindestens einem Applikationsprozessor (AP) und/oder mindestens einer, zum Beispiel hochauflösenden und/oder zum Beispiel als Bildsenke fungierenden, Anzeigeeinheit (DU), zum Beispiel mindestens einem Display oder mindestens einem Monitor.

## Claims

1. A circuit arrangement (S, E) for transmitting
- single-ended logic-level-based data signals and clock signals (HS) as well as
- differential common-mode-based data signals and clock signals (LP)
in the form of at least one serialized common signal stream (SI) between at least one sending arrangement (S) assignable to at least one data source and at least one receiving arrangement (E) assignable to at least one data sink, said common signal stream (SI) being serialized by means of at least one serializer (SE) assigned to the sending arrangement (S), wherein the data rate of the differential data signals and clock signals (LP) is different from the data rate of the single-ended logic-level-based data signals and clock signals (HS), **characterized by**
at least one multiplexer (MU) assigned to the serializer (SE), said multiplexer (MU) for generating the common signal stream (SI), said multiplexer (MU) comprising:
- at least one filter (FI) for differentiating the differential data signals and/or clock signals (LP) from the single-ended logic-level-based data signals and/or clock signals (HS), and
- at least one further multiplexer (MUZ) providable additionally with the differential data signals and/or clock signals (LP) coming from the filter (FI).

2. The circuit arrangement according to claim 1, **characterized in that** the data rate of the differential data signals and clock signals (LP) is smaller than the data rate of the single-ended logic-level-based data signals and clock signals (HS).

3. The circuit arrangement according to claim 1 or 2, **characterized in that** the sending arrangement (S) comprises:
- at least one input (ES) for the data signals and clock signals (HS; LP),
- at least one sending interface logic (LS) connected downstream of the input (ES) for picking up the data signals and clock signals (HS, LP),
- the at least one serializer (SE) connected downstream of the sending interface logic (LS) for generating the common signal stream (SI),
- at least one clock generator (PS) connected downstream of at least one clock module (CS) of the sending interface logic (LS), connected upstream of the serializer (SE) and provided for generating at least one reference clock,
- at least one output driver (AT) connected downstream of the serializer (SE), and
- at least one output (AS) connected downstream of the output driver (AT) for transmitting the common signal stream (SI) to the receiving arrangement (E).

4. The circuit arrangement according to claim 3, **characterized in that** the clock generator (PS) is embodied as at least one phase-locked loop, in particular as at least one clock multiplier unit.

5. The circuit arrangement according to claim 3 or 4, **characterized in that** the serializer (SE) comprises:
- at least one framer (FR) connected downstream of the sending interface logic (LS) for generating at least one frame recognizable in the receiving arrangement (E) for the common signal stream (SI) as well as
- the at least one multiplexer (MU) connected downstream of the framer (FR) for generating the common signal stream (SI).

6. The circuit arrangement according to claim 5, **characterized in that** the framer (FR) is providable with the single-ended logic-level-based data signals (HSD0, HSD1, HSD2, HSD3) as well as with the differential data signals (DD0+, DD0-, DD1+, DD1-, DD2+, DD2-, DD3+, DD3-) and **that** the framer (FR), by means of at least one coder (KO), in particular by means of at least one 5b/6b coder block, embeds the differential data signals (DD0+, DD0-, DD1+, DD1-, DD2+, DD2-, DD3+, DD3-) in the stream of the single-ended logic-level-based data signals (HSD0, HSD1, HSD2, HSD3).

7. The circuit arrangement according to at least one of claims 1 to 6, **characterized in that** the receiving arrangement (E) comprises:
- at least one input (EE) for the common signal stream (SI) transmitted by the sending arrangement (S),
- at least one input amplifier (EV) for picking up the common signal stream (SI),
- at least one clock and data recovery unit (CD) for recovering the data signals and clock signals (HS, LP) from the common signal stream (SI),
- at least one clock module (CE) of at least one receiving interface logic (LE), said clock module (CE) connected downstream of the clock and data recovery unit (CD),
- at least one deserializer (DS) connected downstream of the clock and data recovery unit (CD) for re-parallelizing the data signals and/or clock signals (HS, LP) and for assigning the re-parallelized data signals and/or clock signals (HS, LP) to the receiving interface logic (LE), and
- at least one output (AE) connected downstream of the receiving interface logic (LE) for the data signals and clock signals (HS, LP).

8. The circuit arrangement according to claim 7, **characterized in that** the deserializer (DS) comprises:
- at least one demultiplexer (DM) connected downstream of the clock and data recovery unit (CD) for re-parallelizing the data signals and/or clock signals (HS, LP) as well as
- at least one deframer (DF) connected downstream of the demultiplexer (DM) for assigning the re-parallelized data signals and/or clock signals (HS, LP) to the receiving interface logic (LE).

9. The circuit arrangement according to claim 8, **characterized in that** the deframer (DF) separates the differential data signals (DD0+, DD0-, DD1+, DD1-, DD2+, DD2-, DD3+, DD3-) from the single-ended logic-level-based data signals (HSD0, HSD1, HSD2, HSD3) by means of at least one decoder (DK), in particular by means of at least one 6b/5b decoder block, and **that** the deframer (DF) assigns the re-parallelized data signals to the respective data lines (CH0+, CH0-, CH1+, CH1-, CH2+, CH2-, CH3+, CH3-).

10. The circuit arrangement according to at least one of claims 1 to 9, **characterized in that** the common signal stream (SI) is transmittable between the sending arrangement (S) and the receiving arrangement (E)
- via at least one optical medium (OM), in particular via at least one optical waveguide, for example via at least one glass fibre and/or via at least one plastic fibre, and/or
- via at least one electrical or galvanic link (GA), in particular of one bit width, in particular via at least one copper cable and/or via at least one electrical line, for example provided on at least one printed circuit board.

11. A method for transmitting
- single-ended logic-level-based data signals and clock signals (HS) as well as
- differential common-mode-based data signals and clock signals (LP)
in the form of at least one serialized common signal stream (SI) between at least one sending arrangement (S) assignable to at least one data source and at least one receiving arrangement (E) assignable to at least one data sink, said common signal stream (SI) being serialized by means of at least one serializer (SE), wherein the data rate of the differential data signals and clock signals (LP) is different from the data rate of the single-ended logic-level-based data signals and clock signals (HS)
**characterized by**
at least one multiplexer (MU) assigned to the serializer (SE), said multiplexer (MU) for generating the common signal stream (SI), said multiplexer (MU) comprising:
- at least one filter (FI) for differentiating the differential data signals and/or clock signals (LP) from the single-ended logic-level-based data signals and/or clock signals (HS), and
- at least one further multiplexer (MUZ) provided additionally with the differential data signals and/or clock signals (LP) coming from the filter (FI).

12. The method according to claim 11, **characterized in that** the data rate of the differential data signals and clock signals (LP) is smaller than the data rate of the single-ended logic-level-based data signals and clock signals (HS).

13. The method according to claim 11 or 12, **characterized in that** the common signal stream (SI) is transmitted between the sending arrangement (S) and the receiving arrangement (E)
- via at least one optical medium (OM), in particular via at least one optical waveguide, for example via at least one glass fibre and/or via at least one plastic fibre, and/or
- via at least one electrical or galvanic link (GA), in particular of one bit width, in particular via at least one copper cable and/or via at least one electrical line, for example provided on at least one printed circuit board.

14. The method according to at least one of claims 11 to 13 and/or use of at least one circuit arrangement (S, E) according to at least one of claims 1 to 10 during serial and/or bundled, in particular CSI protocol-based and/or CSI-2 protocol-based and/or CSI-3 protocol-based and/or DSI protocol-based and/or DSI-2 protocol-based, transmission of single-ended logic-level-based data signals and clock signals (HS) as well as of differential, in particular common-mode-based, data signals and clock signals (LP), in particular of D-PHY data signals and D-PHY clock signals, for example of up to four bit-wide MIPI-D-PHY data signals and MIPI-D-PHY clock signals, between at least one data source, in particular at least one camera (KA), for example of high resolution and/or for example acting as an image source, and/or at least one application processor (AP), and at least one data sink, in particular at least one application processor (AP) and/or at least one display unit (DU), for example of high resolution and/or for example acting as an image sink, for example at least one display or at least one monitor.

## Revendications

1. Dispositif de circuit (S, E) pour transmettre
- des signaux de données et d'horloge (HS) asymétriques basés sur des niveaux logiques ainsi que
- des signaux de données et d'horloge (LP) différentielles basés sur le mode commun sous la forme d'au moins un flux de signaux (SI) commun sérialisé entre au moins un dispositif d'émission (S) et au moins un dispositif de réception (E), le dispositif d'émission (S) pouvant être alloué à au moins une source de données et le dispositif de réception (E) pouvant être alloué à au moins un collecteur de données, le flux de signaux (SI) commun étant sérialisé au moyen d'au moins un sérialiseur (SE) alloué au dispositif d'émission (S), où le débit de données des signaux de données et d'horloge (LP) différentielles est différent du débit de données des signaux de données et d'horloge (HS) asymétriques basés sur des niveaux logiques,
**caractérisé par**
au moins un multiplexeur (MU) alloué au sérialiseur (SE) pour générer le flux de signaux (SI) commun, le multiplexeur (MU) comportant :
- au moins un filtre (FI) pour différencier les signaux de données et/ou d'horloge (LP) différentielles des signaux de données et d'horloge (HS) asymétriques basés sur des niveaux logiques, et
- au moins un autre multiplexeur (MUZ), auquel les signaux de données et/ou d'horloge (LP) différentielles provenant du filtre (FI) peuvent être appliqués en plus.

2. Dispositif de circuit selon la revendication 1, **caractérisé en ce que** le débit de données des signaux de données et d'horloge (LP) différentielles est inférieur au débit de données des signaux de données et d'horloge (HS) asymétriques basés sur des niveaux logiques.

3. Dispositif de circuit selon la revendication 1 ou 2, **caractérisé en ce que** le dispositif d'émission (S) comporte :
- au moins une entrée (ES) pour les signaux de données et signaux d'horloge (HS ; LP),
- au moins une logique d'interface d'émission (LS), connectée en aval de l'entrée (ES), pour recevoir les signaux de données et signaux d'horloge (HS, LP),
- l'au moins un sérialiseur (SE), connecté en aval de la logique d'interface d'émission (LS), pour générer le flux de signaux (SI) commun,
- au moins un générateur d'horloge (PS), connecté en aval d'au moins un module d'horloge (CS) de la logique d'interface d'émission (LS), connecté en amont du sérialiseur (SE) et prévu pour générer au moins une horloge de référence,
- au moins un pilote de sortie (AT), connecté en aval du sérialiseur (SE), et
- au moins une sortie (AS), connectée en aval du pilote de sortie (AT), pour transmettre le flux de signaux (SI) commun au dispositif de réception (E).

4. Dispositif de circuit selon la revendication 3, **caractérisé en ce que** le générateur d'horloge (PS) est conçu comme au moins une phase-locked loop, en particulier comme au moins une une clock multiplier unit.

5. Dispositif de circuit selon la revendication 3 ou 4, **caractérisé en ce que** le sérialiseur (SE) comporte :
- au moins un encadreur (FR), connecté en aval de la logique d'interface d'émission (LS), pour générer au moins un cadre pour le flux de signaux (SI) commun reconnaissable dans le dispositif de réception (E) ainsi que
- l'au moins un multiplexeur (MU), connecté en aval du encadreur (FR), pour générer le flux de signaux (SI) commun.

6. Dispositif de circuit selon la revendication 5, **caractérisé en ce que** l'encadreur (FR) peut être chargé avec les signaux de données (HSD0, HSD1, HSD2, HSD3) asymétriques basés sur des niveaux logiques ainsi qu'avec les signaux de données (DD0+, DD0-, DD1+, DD1-, DD2+, DD2-, DD3+, DD3-) différentielles et **que** l'encadreur (FR) intègre les signaux de données (DD0+, DD0-, DD1+, DD1-, DD2+, DD2-, DD3+, DD3-) différentielles dans le flux de signaux de données (HSD0, HSD1, HSD2, HSD3) asymétriques basés sur des niveaux logiques au moyen d'au moins un codeur (KO), en particulier au moyen d'au moins un bloc de codage 5b/6b.

7. Dispositif de circuit selon au moins l'une des revendications 1 à 6, **caractérisé en ce que** le dispositif de réception (E) comporte :
- au moins une entrée (EE) pour le flux de signaux (SI) commun transmis par le dispositif d'émission (S),
- au moins un amplificateur d'entrée (EV) pour recevoir le flux de signaux (SI) commun,
- au moins une unité de récupération d'horloge et de données (CD) pour restituer les signaux de données et signaux d'horloge (HS, LP) du flux de signaux (SI) commun,
- au moins un module d'horloge (CE) d'au moins une logique d'interface de reception (LE), lequel module d'horloge (CE) connecté en aval de l'unité de récupération d'horloge et de données (CD),
- au moins un désérialiseur (DS), connecté en aval de l'unité de récupération d'horloge et de données (CD), pour reparalléliser les signaux de données et/ou d'horloge (HS, LP) et pour allouer les signaux de données et/ou d'horloge (HS, LP) reparallallisés à la logique d'interface de reception (LE) et
- au moins une sortie (AE), connectée en aval de la logique d'interface de reception (LE), pour les signaux de données et d'horloge (HS, LP).

8. Dispositif de circuit selon la revendication 7, **caractérisé en ce que** le désérialiseur (DS) comporte :
- au moins un démultiplexeur (DM), connecté en aval de l'unité de récupération d'horloge et de données (CD), pour reparalléliser les signaux de données et/ou d'horloge (HS, LP) et
- au moins un décadreur (DF), connecté en aval du démultiplexeur (DM), pour allouer les signaux de données et/ou d'horloge (HS, LP) reparallélisés à la logique d'interface de reception (LE).

9. Dispositif de circuit selon la revendication 8, **caractérisé en ce que** le décadreur (DF) sépare les signaux de données (DD0+, DD0-, DD1+, DD1-, DD2+, DD2-, DD3+, DD3-) différentielles des signaux de données (HSD0, HSD1, HSD2, HSD3) asymétriques basés sur des niveaux logiques au moyen d'au moins un décodeur (DK), en particulier au moyen d'au moins un bloc de décodage 6b/5b, et **que** le décadreur (DF) alloue les signaux de données reparallélisés aux lignes de données (CH0+, CH0-, CH1+, CH1-, CH2+, CH2-, CH3+, CH3-) respectives.

10. Dispositif de circuit selon au moins l'une des revendications 1 à 9, **caractérisé en ce que** le flux de signaux (SI) commun est transmissible entre le dispositif d'émission (S) et le dispositif de réception (E)
- par au moins un support optique (OM), en particulier par au moins un guide d'ondes optique, par exemple par au moins une fibre de verre et/ou par au moins une fibre plastique, et/ou
- par au moins une connexion (GA) électrique ou galvanique, en particulier avec un bit de largeur, en particulier par au moins un câble en cuivre et/ou par au moins une ligne électrique, par exemple disposée sur au moins une carte de circuit imprimé.

11. Procédé pour transmettre
- des signaux de données et d'horloge (HS) asymétriques basés sur des niveaux logiques ainsi que
- des signaux de données et d'horloge (LP) différentielles basés sur le mode commun sous la forme d'au moins un flux de signaux (SI) commun sérialisé entre au moins un dispositif d'émission (S) et au moins un dispositif de réception (E), le dispositif d'émission (S) pouvant être alloué à au moins une source de données et le dispositif de réception (E) pouvant être alloué à au moins un collecteur de données, le flux de signaux (SI) commun étant sérialisé au moyen d'au moins un sérialiseur (SE), où le débit de données des signaux de données et d'horloge (LP) différentielles est différent du débit de données des signaux de données et d'horloge (HS) asymétriques basés sur des niveaux logiques,
**caractérisé par**
au moins un multiplexeur (MU) alloué au sérialiseur (SE) pour générer le flux de signaux (SI) commun, le multiplexeur (MU) comportant :
- au moins un filtre (FI) pour différencier les signaux de données et/ou d'horloge (LP) différentielles des signaux de données et d'horloge (HS) asymétriques basés sur des niveaux logiques, et
- au moins un autre multiplexeur (MUZ), auquel les signaux de données et/ou d'horloge (LP) différentielles provenant du filtre (FI) sont appliqués en plus.

12. Procédé selon la revendication 11, **caractérisé en ce que** le débit de données des signaux de données et d'horloge (LP) différentielles est inférieur au débit de données des signaux de données et d'horloge (HS) asymétriques basés sur des niveaux logiques.

13. Procédé selon la revendication 11 ou 12, **caractérisé en ce que** le flux de signaux (SI) commun est transmis entre le dispositif d'émission (S) et le dispositif de réception (E)
- par au moins un support optique (OM), en particulier par au moins un guide d'ondes optique, par exemple par au moins une fibre de verre et/ou par au moins une fibre plastique, et/ou
- par au moins une connexion (GA) électrique ou galvanique, en particulier avec un bit de largeur, en particulier par au moins un câble en cuivre et/ou par au moins une ligne électrique, par exemple disposée sur au moins une carte de circuit imprimé.

14. Procédé selon au moins l'une des revendications 11 à 13 et/ou utilisation d'au moins un dispositif de circuit (S, E) selon au moins l'une des revendications 1 à 10 lors de l'une transmission série et/ou groupée, en particulier basée sur le protocole CSI et/ou basée sur le protocole CSI-2 et/ou basée sur le protocole CSI-3 et/ou basée sur le protocole DSI et/ou basée sur le protocole DSI-2, de signaux de données et d'horloge (HS) asymétriques basés sur des niveaux logiques ainsi que de signaux de données et d'horloge (LP) différentielles, en particulier basés sur le mode commun, en particulier de signaux de données D-PHY et signaux d'horloge D-PHY, par exemple de signaux de données MIPI-D-PHY et signaux d'horloge MIPI-D-PHY jusqu'à quatre bits de largeur, entre au moins une source de données, en particulier au moins une caméra (KA), par exemple à haute résolution et/ou par exemple dans la fonction d'une source d'image, et/ou au moins un processeur d'application (AP), et au moins un collecteur de données, en particulier au moins un processeur d'application (AP) et/ou au moins une unité d'affichage (DU), par exemple à haute résolution et/ou par exemple dans la fonction d'un collecteur d'image, par exemple au moins un écran ou au moins un moniteur.
